Europäisches Patentamt

European Patent Office

Office européen des brevets

(19)

(11) EP 0 688 807 B1

(12) **EUROPÄISCHE PATENTSCHRIFT**

(45) Veröffentlichungstag und Bekanntmachung des Hinweises auf die Patenterteilung:
**01.09.1999 Patentblatt 1999/35**

(51) Int Cl.⁶: **C08G 64/30**, C08L 69/00, C08J 11/22

(21) Anmeldenummer: **95108833.5**

(22) Anmeldetag: **08.06.1995**

(54) **Verfahren zum chemischen Recycling von Polycarbonaten**

Process for chemical recycling of polycarbonates

Procédé de recyclage chimique de polycarbonates

(84) Benannte Vertragsstaaten:
**BE DE FR GB IT NL**

(30) Priorität: **21.06.1994 DE 4421701**

(43) Veröffentlichungstag der Anmeldung:
**27.12.1995 Patentblatt 1995/52**

(73) Patentinhaber: **BAYER AG**
**51368 Leverkusen (DE)**

(72) Erfinder:
• **Buysch, Hans-Josef, Dr.**
  **D-47809 Krefeld (DE)**
• **Kühling, Steffen, Dr.**
  **D-40670 Meerbusch (DE)**

(56) Entgegenhaltungen:
**DD-A- 46 353          DE-A- 4 240 314**

**Beschreibung**

Gegenstand der vorliegenden Erfindung ist ein Verfahren zum chemischen Recycling von thermoplastischen, aromatischen Polycarbonaten, das dadurch gekennzeichnet ist, daß man die Polycarbonate mit Diarylcarbonaten in Gegenwart von Katalysatoren zu Oligocarbonaten abbaut, diese kristallisiert, reinigt und dann wieder zu thermoplastischen Polycarbonaten polykondensiert, wobei gegebenenfalls vor der Kristallisation unlösliche Bestandteile entfernt werden.

Es ist bekannt, thermoplastische Polycarbonate mit Diarylcarbonaten zu den Monomerbausteinen abzubauen (siehe beispielsweise DDR-PS 46 353). Nach diesem Verfahren können die Bausteine jedoch nicht isoliert und gereinigt werden. Im Falle stark verunreinigter Polycarbonate wird das erhaltene Reaktionsgemisch allenfalls nach Lösen in Alkohol mit A-Kohle geklärt und dann sofort wieder aufkondensiert. Dadurch können jedoch bestenfalls farbliche Verunreinigungen, nicht jedoch Additive und Zersetzungsprodukte der Polycarbonate aus thermischer, oxidativer und photochemischer Schädigung entfernt werden. Diese verursachen Minderwertigkeiten bei der Resynthese wie unzureichende Farbqualität und mechanische Eigenschaften.

Aus der deutschen Patentanmeldung P 4 240 314.6 (Le A 29 274) vom 1.12.1992 ist bekannt, Polycarbonate durch Umsetzung mit Monophenolen zu Oligocarbonaten abzubauen, und diese danach wieder zu Polycarbonaten aufzukondensieren. Dieses Verfahren hat ebenfalls den Nachteil, daß eine Reinigung der Oligomeren nicht möglich ist und weiter, daß OH-Endgruppen enthaltende Oligomere wesentlich empfindlicher gegen thermische und oxidative Belastung sind und rasch verfärben und geschädigt werden.

Es wurde nun gefunden, daß das chemische Recycling von Polycarbonaten sich deutlich verbessern läßt, wenn man den Abbau nicht mit Monophenolen, sondern mit Diarylcarbonaten macht und nicht bis zu den Monomerbausteinen, sondern nur bis zu den Oligocarbonaten durchführt.

Polycarbonate im Sinne der Erfindung sind allgemein solche auf der Basis von aliphatischen und/oder araliphatischen und/oder aromatischen Dihydroxyverbindungen wie sie in der Technik verwendet werden und werden können.

Aliphatische Dihydroxyverbindungen sind z.B. Ethylenglykol, Propylenglykol-1,2 und -1,3, Neopentylglykol, Hexandiol-1,6, Cyclohexandimethanol, 2,2,5-Trimethylhexandiol-1,6, Dodecandiol-1,2, Trimethylolpropan-monoallylether, Dianhydrosorbit, Diglykol, Triglykol, Tetraglykol oder Gemische dieser Diole, bevorzugt Neopentylglykol und Hexandiol.

Araliphatische Dihydroxyverbindungen sind z.B. Xylylendiole, die Oxyethylierungsprodukte von Bisphenolen wie Hydrochinon, Resorcin, Brenzkatechin, Bisphenol A, Dihydroxydiphenyl, Dihydroxydiphenylsulfon, Bisphenol F, Bisphenol Z und anderen üblicherweise verwendeten Bisphenolen oder Gemische dieser Diole, bevorzugt die Oxethylierungsprodukte von 2,2-Bis-(4-hydroxyphenyl)-propan.

Aromatische Dihydroxyverbindungen sind beispielsweise Dihydroxybenzole, Dihydroxybiphenyl, Dihydroxydiphenylether, Dihydroxydiphenylsulfid, Dihydroxydiphenylsulfon, Dihydroxydiphenylmethan (Bisphenol F), Dihydroxydipenylethan, Dihydroxydiphenylpropan (Bisphenol A), Dihydroxydiphenyl cyclohexan (Bisphenol Z), 3,3,5-Trimethyl-1,1-(dihydroxydiphenyl)-cyclohexan, ,αα'-(Dihydroxyphenyl)-diisopropylbenzole, Dihydroxybenzophenon oder Gemische dieser aromatischen Dihydroxyverbindungen, vorzugsweise Bisphenol A, Bisphenol Z, Dihydroxydiphenylmethan und 3,3,5-Trimethyl-1,1-(dihydroxydiphenyl)-cyclohexan, Bisphenol A ist besonders bevorzugt.

Die erfindungsgemäß zu spaltenden Polycarbonate sind literaturbekannt.

Die zu spaltenden Polycarbonate können Molekulargewichte $\overline{M}$w (Gewichtsmittel, ermittelt, beispielsweise durch Gelpermeationschromatographie) von 12 000 bis 200 000, vorzugsweise von 15 000 bis 80 000 haben. Die Molekulargewichte können auch durch Bestimmung der relativen Viskosität in $CH_2Cl_2$ bei 25°C und einer Konzentration von 0,5 Gew.-% in bekannter Weise ermittelt werden.

Bevorzugt zu spaltende Polycarbonate sind die aromatischen, thermoplastischen Polycarbonate, die bevorzugt aus mindestens einem der nachstehend aufgeführten Diphenole hergestellt sind. Es sind dies

4,4'-Dihydroxydiphenyl
2,2-Bis-(4-hydroxyphenyl)-propan (Bisphenol A)
2,4-Bis-(4-hydroxyphenyl)-2-methylbutan
1,1-Bis-(4-hydroxyphenyl)-cyclohexan
α,α'-Bis-(4-hydroxyphenyl)-p-diisopropylbenzol
2,2-Bis-(3-chlor-4-hydroxyphenyl)-propan
2,2-Bis-(3,5-dichlor-4-hydroxyphenyl)-propan
2,2-Bis-(3,5-dibrom-4-hydroxyphenyl)-propan und
1,1-Bis-(4-hydroxyphenyl)-3,3,5-trimethylcyclohexan.

Die erfindungsgemäß zu spaltenden Polycarbonate können auch in üblicher Weise verzweigt sein durch den Einbau von drei-oder mehr als dreifunktionellen Verbindungen.

Generell sind für das erfindungsgemäße Verfahren die verschiedensten Polycarbonatformmassen verwendbar, vorzugsweise Polycarbonatabfall. welcher anderweitig nicht mehr verwertbar ist, oder bei der Polycarbonatformkörperberstellung anfallender Verschnitt, unbrauchbar gewordene Polycarbonatformkörper etc. Diese werden gegebenenfalls vorher zerkleinert.

Demzufolge können die erfindungsgemäß zu spaltenden Polycarbonate noch die üblichen Zuschläge enthalten, wie mineralische Füllstoffe wie Quarzmehl, Glaspulver, Glasfasern, Stabilisatoren, UV-Schutzmittel, Gleitmittel, Pigmente, Farbstoffe, ferner polymere Blendpartner, wie beiwpielsweise Vinylpolymerisate aus Styrol, Acrylnitril und Butadien.

Erfindungsgemäß geeignete Katalysatoren sind die bekannten Umesterungskatalysatoren wie beispielsweise Hydride, Oxide, Hydroxide, Alkohole, Amide oder Salze von Alkalimetallen, wie Lithium, Natrium, Kalium, Rubidium und Cäsium, bevorzugt von Lithium, Natrium und Kalium, besonders bevorzugt von Natrium und Kalium. Salze von Alkalimetallen sind solche von organischen und anorganischen Säuren, wie beispielsweise von Essigsäure, Propionsäure, Buttersäure, Benzoesäure, Stearinsäure, Kohlensäure, Salzsäure, HBr, HJ, Salpetersäure, $H_2SO_4$, HF, Phosphorsäure, Borsäure, Zinnsäuren und Antimonsäuren. Bevorzugte Alkalimetallkatalysatoren sind Alkalimetall-Oxide, -Hydroxide, -Alkoholate, -Acetate, -Propionate, -Benzoate, -Carbonate und -Hydrogencarbonate; besonders bevorzugte Alkalimetallkatalysatoren sind die Alkalimetall-Hydroxide, -Alkoholate,-Acetate, -Benzoate und -Carbonate. Die Alkalimetallkatalysatoren werden in Mengen von 0,00005 bis 10 Gew.-%, insbesondere von 0,0001 bis 5 Gew.-% und besonders bevorzugt in Mengen von 0,0002 bis 3 Gew.-%, bezogen auf die Gewichtsmenge des zu spaltenden Polycarbonats, eingesetzt.

Die Alkalimetallkatalysatoren können gegebenenfalls in Kombination mit komplexierenden Stoffen, wie beispielsweise Kronenethern, Polyethylenglykolen oder bicyclischen stickstoffhaltigen Kryptanden eingesetzt werden.

Ein geeigneter Kronenether ist beispielsweise Dibenzo-18-krone-6, ein stickstoffhaltiger Kryptand ist beispielsweise 1,9-Dimethyl-1,9-diaza-dibenzo-18-krone-6.

Die komplexierenden Stoffe werden in Mengen von 0,1 bis 200 Mol-%, vorzugsweise von 1 bis 100 Mol-%, bezogen auf 1 Mol Alkalimetallverbindung, eingesetzt.

Katalysatoren für die erfindungsgemäße Polycarbonatspaltung sind außerdem Stickstoff-haltige Basen, wie beispielsweise sekundäre und tertiäre Amine wie Triethylamin, Tributylamin, Methyldibenzylamin und Dimethylcyclohexylamin, Diazabicycloundecan oder Diazabicyclononan.

Die Stickstoff-haltigen Basen werden in Mengen von 0,0001 bis 21 Gew.-%, vorzugsweise von 0,0005 bis 6 Gew.-%, besonders bevorzugt 0,001 bis 3 Gew.-%, bezogen auf die Gewichtsmenge des zu spaltenden Polycarbonats, eingesetzt.

Katalysatoren für die erfindungsgemäße Polycarbonatspaltung sind außerdem Komplexe oder Salze oder Verbindungen des Magnesiums, Calciums, Bariums, Zinks, Zinns, Titans oder Zirconiums. Beispiele solcher Systeme sind Zinnmethoxid, Dimethylzinn, Dibutylzinnoxid, Dibutylzinndilaurat, Tributylzinnhydrid, Tributylzinnchlorid, Zinn(II)ethylhexanoate, Zirconiumalkoxide (Methyl, Ethyl, Butyl), Zirconium(IV)halogenide (F, Cl, Br, J) Zirconiumnitrate, Zirconiumacetylacetonat, Titanalkoxide (Methyl, Ethyl, Isopropyl), Titanacetat und Titanacetylacetonat.

Diese Katalysatoren werden in Mengen von 0,00005 bis 10 Gew.-%, vorzugsweise von 0,0001 bis 5 Gew.-% und insbesondere von 0,0002 bis 3 Gew.-%, bezogen auf die Gewichtsmenge des zu spaltenden Polycarbonats, eingesetzt.

Die erfindungsgemäße Polycarbonatspaltung kann auch mit heterogenen Katalysatoren durchgeführt werden. Diese können als Pulver oder als Formlinge wie Kugeln, Granulat, Stäbchen oder in Bruchstücken vorliegen, wobei Länge und Durchmesser der Formlinge zwischen 0,3 bis 20 mm, bevorzugt 0,5 bis 10 mm betragen.

Heterogene Katalysatoren im Sinne der Erfindung sind vor allem Aktivkohlen. Darunter ist aktivierter Kohlenstoff zu verstehen, der aus unterschiedlichen, Kohlenstoff liefernden Vorprodukten hergestellt werden kann. Die Verfahren zur Überführung in die aktive Form können ebenfalls sehr unterschiedlich sein. Bei solchen Herstellungsverfahren werden Aktivkohlen erhalten, die BET-Oberflächen von 200 bis 3 000 m$^2$/g, bevorzugt 300 bis 2 000 m$^2$/g, besonders bevorzugt 500 bis 15 00 m$^2$/g aufweisen.

Geeignete Aktivkohle-Typen sind beispielsweise solche auf Basis von Holz, verschiedenen Kohlearten, Bitumen, Mineralölteeren, Torf, Lignin, Polysacchariden, Knochen und Koksarten. Ihre Anwendung erfolgt in bekannter Weise.

Diarylcarbonate im Sinne der Erfindung sind Diphenyl-, Dikresyl-, Dixylenyl-, Dichlorphenyl-, Di-tert.-butylphenyl-, Dinaphthyl- und Di-biphenylcarbonat, bevorzugt Diphenyl- und Dikresyl-, besonders bevorzugt Diphenylcarbonat.

Die erfindungsgemäße Spaltung der Polycarbonate durch die Umsetzung mit den Diarylcarbonaten kann diskontinuierlich oder kontinuierlich erfolgen, sie kann in Substanz oder unter Zusatz eines Polycarbonatlösungsmittels erfolgen.

Geeignete Lösungsmittel sind solche, die unter den Reaktionsbedingungen inert sind und die Polycarbonate unter den Reaktionsbedingungen lösen.

Genannt seien beispielsweise Kohlenwasserstoffe, wie Octan, Dodecan, Isooctan, Isododecan, Decalin, Toluol, Xylole, Cumol, Cymol, Trimethylbenzole, Tetramethylbenzole, Diisopropylbenzole, Tetralin, Naphthalin und Bisphenyl, Ether wie Dibuthylether, Dioxan, Dimethyl-diglykol, Diethyltriglykol, Dimethyltetraglykol, Anisol, Phenylbutylether, Methoxytoluole, Dimethoxybenzole und Diphenylether, Halogenkohlenwasserstoffe, wie Chlorbenzol, Dichlorbenzol, Brombenzol, Dibrombenzole, Chlornaphthaline, Chlortoluole, Chlorxylole und Chlorcumole sowie Amide wie Dimethylacetamid, N-Acetylmorpholin und N,N-Dimethylbenzamid.

Die Gewichtsmenge an Lösungsmittel beträgt das 1- bis 20-fache, vorzugsweise 2-bis 15-fache, besonders bevorzugt das 3- bis 12-fache der zu spaltenden Polycarbonatgewichtsmenge.

Bei diskontinuierlicher Arbeitsweise wird die Umsetzung in Rührkesseln, Knetern oder sonstigen dem Fachmann geläufigen heizbaren Mischapparaturen durchgeführt. Bevorzugt wird eine kontinuierliche Verfahrensweise beispielsweise in Mischapparaturen für hochviskose Materialien wie beispielsweise Extrudern verschiedener Bauart, in die Polycarbonat, Diarylcarbonat und Katalysator getrennt an verschiedenen Stellen oder aber auch gemeinsam eindosiert werden können.

Die Umsetzung verläuft bei Temperaturen von 120°C bis 320°C, vorzugsweise von 150°C bis 310°C, besonders bevorzugt zwischen 160°C und 300°C ab. Wird in Anwesenheit eines Lösungsmittels gearbeitet, so muß entsprechend dessen Dampfdruck unter erhöhten Druck bis zu ca. 100 bar gearbeitet werden, wenn das Lösungsmittel im Gemisch verbleiben soll.

Das Molverhältnis von Polycarbonat (bezogen auf die Struktur-Einheit) zu Diarylcarbonat liegt zwischen

1:0,05 und 1:3,5, bevorzugt
1:0,10 und 1:3,0, besonders bevorzugt
1:0,15 und 1:2,5, ganz besonders bevorzugt zwischen
1:0,20 und 1:2,0.

Die Reaktionszeit beträgt je nach Viskosität der Reaktionsmischung, nach Katalysatormenge und nach Temperatur mehrere Stunden bis wenige Minuten und ist in der Regel leicht durch Messung der Viskosität zu bestimmen, die nach Beendigung der Spaltung einen konstanten Wert erreicht.

Wird ein heterogener Katalysator eingesetzt, so kann er im Diskontiprozeß dem Reaktionsgemisch als Pulver zugesetzt und nach der Spaltung, aber vor der Kristallisation der Oligocarbonate, durch verschiedene Techniken wie Zentrifugation oder Filtration wieder abgetrennt werden. Bevorzugt wird jedoch eine Kontiarbeitsweise, bei der die Schmelze oder Lösung der Reaktanten über ein Bett von Katalysatorformlingen bei der gewünschten Temperatur und mit einer für die Umsetzung genügenden Verweilzeit geleitet wird. Diese kann je nach Temperatur, Viskosität und Aktivität des Katalysators zwischen mehreren Stunden und etwa 10 Minuten schwanken. Durch Vorversuche läßt sie sich leicht mit Hilfe der Viskositätsmessung ermitteln.

Die so erhaltenen Oligocarbonate haben zweckmäßig je nach dem eingesetzten Molverhältnis von Polycarbonat zu Diarylcarbonat und je nach dem, ob die Einstellung des Gleichgewichtes abgewartet wurde, ein mittleres Molgewicht $\overline{M}w$ (Gewichtsmittel, ermittelt durch beispielsweise Gelpermeationschromatographie) von ca. 500 bis 10 000, bevorzugt 800 bis 8 000, besonders bevorzugt 1 000 bis 7 000. Es ist nämlich nicht in jedem Fall erforderlich, die Reaktion zwischen dem Polycarbonat und dem Diarylcarbonat bis zum Ende, der Einstellung eines Gleichgewichtes zwischen den Monomeren und Oligocarbonaten laufen zu lassen. Die Reaktion kann im Prinzip zu einem beliebigen Zeitpunkt unterbrochen und das Produkt aufgearbeitet werden. Sinnvollerweise wird man die Reaktion dann abbrechen, wenn schon Oligocarbonate mit hinreichend niedrigen Molgewichten gebildet sind, damit die Viskosität für die weitere Bearbeitung nicht zu hoch ist, also wenn das $\overline{M}w$ der Oligocarbonate ≤ 10 000 ist. Eine derartige Arbeitsweise kann von Vorteil sein, wenn man die Oligocarbonatschmelze mit überschüssigem Diarylcarbonat zwecks besserer Aufarbeitung verdünnen und noch kein Lösungsmittel zusetzen möchte.

Das den Reaktor verlassende, gegebenenfalls Lösungsmittel enthaltende Gemisch aus Oligocarbonaten und in der Regel nicht umgesetztem Diarylcarbonat kann abgekühlt und granuliert werden, wenn die Kristallisation später erfolgen soll.

Bevorzugt jedoch wird es als Schmelze in das für die Kristallisation vorgesehene Lösungsmittel eingetragen. Das Eintragen der Schmelze in das Lösungsmittel kann beispielsweise in einem unter Druck betreibbaren und kühlbaren Rührkessel geschehen, wobei sich die Schmelze mit dem Lösungsmittel mischt und sofort, beziehungsweise nach Abkühlen kristallin ausfällt und die Kristalle nach üblichen Methoden vom Lösungsmittel abgetrennt werden.

Dieser Vorgang kann auch kontinuierlich gestaltet werden. Dazu trägt man die den Reaktor verlassende Schmelze mit dem Lösungsmittel in einen kontinuierlich betriebenen Kristaller ein. Geeignet dafür sind die üblicherweise verwendeten Kristaller.

Die Temperatur für die Kristallisation beträgt zwischen 10°C und 180°C, vorzugsweise 25°C bis 150°C und hängt ab vom jeweiligen Lösungsmittel, von der Zusammensetzung und der Molgewichtsverteilung im Oligocarbonat-

EP 0 688 807 B1

gemisch. Im allgemeinen kann sie umso höher sein, je höher das Molgewicht ist.

Das Gewichtsverhältnis von Lösungsmittel und Schmelze liegt zwischen 10:0,5 und 10:100, vorzugsweise zwischen 10:1 und 10:50, besonders bevorzugt zwischen 10:2 und 10:30.

Geeignete Lösungsmittel für die Kristallisation sind die oben genannten außer den Glykolen und den Amiden, ferner Ester wie Ethylacetat, Butylacetat, Methylacetat, Carbonate wie Dimethyl- und Diethylcarbonate, Ketone wie Aceton und Methylethylketon, niedrigsiedende Alkohole wie Methanol, Ethanol und Isopropanol. Bevorzugt sind niedere Kohlenwasserstofe, Ketone, Ester, Carbonate und Alkohole.

Das erhaltene Kristallisat wird schließlich getrocknet.

Bei stärkerer Verschmutzung, beziehungsweise Schädigung des eingesetzten Polycarbonats oder bei Anwesenheit von Additiven, die vor der Aufkondensation entfernt werden sollen, kann eine zweite oder dritte Kristallisation der Oligocarbonate gegebenenfalls aus einem anderen Lösungsmittel angezeigt sein, um hochgereinigtes Oligocarbonat zu erhalten.

Auf diese Weise können in der Oligocarbonatschmelze, beziehungsweise in der Oligocarbonatlösung gelöste Bestandteile abgetrennt werden.

Die mindestens einstufige Kristallisation der Oligocarbonate kann nach verschiedenen Verfahren diskontinuierlich oder kontinuierlich in bekannter Weise durchgeführt werden.

Die in der Oligocarbonatschmelze, beziehungsweise in der Oligocarbonatlösung unlöslichen Bestandteile, werden vor dem Einspeisen in die Kristallisation durch Filtration, Zentrifugation oder Sedimentation entfernt. Dies erfolgt gegebenenfalls zusammen mit der Entfernung des heterogenen Katalysators.

Die den Reaktor verlassende Schmelze oder (bei hoher Temperatur) Lösung enthält - sofern kein heterogener Katalysator verwendet wurde - die gesamte Menge des eingesetzten homogenen Katalysators. Dieser kann, soweit er nicht durch das Lösungsmittel beim Kristallisieren ausgewaschen wird, für die spätere Aufkondensation im Oligocarbonat verbleiben.

In manchen Fällen ist jedoch eine Entfernung des Katalysators zweckmäßig. Mit verschiedenen Adsorbentien und Ionenaustauschern kann er quantitativ aus der Schmelze oder aus einer Lösung der Oligocarbonate abgetrennt werden. Dies erfolgt in bekannter Weise.

Geeignete Adsorbentien, beziehungsweise Ionenaustauscher, sind beispielsweis A-Kohle, Kieselgur, Cellulose oder Zeolithe, polymere vernetzte Acrylsäuren, Tonerden, säureaktivierte Schichtsilikate und sulfonierte vernetzte Polystyrolharze.

Die Menge an Adsorbens, beziehungsweise Ionenaustauschern, muß hierbei natürlich so bemessen sein, daß sie die vorhandene Katalysatormenge aus dem Reaktorgemisch aufnehmen kann, mindestens also die dem Katalysator äquivalente Menge. In der Regel werden jedoch größere Menge angewendet, damit die Katalysatorentfernung auch rasch und wirksam erfolgt, etwa 2 Gew.-%, bis 50 Gew-%, vorzugsweise 5 Gew.-% bis 40 Gew.-%, besonders bevorzugt 8 Gew.-% bis 25 Gew.-%, bezogen auf die eingesetzte Menge an Polycarbonat.

Färbende Verunreinigungen, die das Ausgangspolycarbonat mitbringt, können außer durch die vorstehend bereits erläuterte Kristallisation auch durch die letztgenannte adsorptive Reinigungsmethode mittels Adsorbentien oder Ionenaustauschern aus der Schmelze oder einer Lösung der Oligocarbonate erfolgen.

Die nach dem erfindungsgemäßen Verfahren erhaltenen Oligocarbonate fallen als leicht handhabbares, fließfähiges trockenes Pulver an, das keine Oxidations- und Verfärbungsneigung besitzt, da alle phenolischen OH-Gruppen durch Phenylcarbonatgruppen blockiert sind, und deshalb auch bei Raumtemperatur mit Luft in Berührung kommen kann. Für ein Wiederaufkondensieren kann es leicht in einem Reaktor dosiert und gegebenenfalls mit anderen Substanzen vermischt werden.

Die Polykondensation der kristallisierten Oligocarbonate zu Polycarbonaten gelingt dadurch, daß man bei Temperaturen zwischen 100°C bis 400°C, bevorzugt bei 220°C bis 320°C und einem Druck < 100 mbar bis 0,01 mbar die Polykondensation durchführt. Es kann jedoch vorteilhaft sein, die Polykondensation zu erleichtern bzw. zu fördern, indem man ein OH/Arylcarbonat-Endgruppenverhältnis der Reaktanten zwischen > 25 % OH zu < 75 % Arylcarbonat und < 50 % OH zu > 50 % Arylcarbonat herstellt. Dies kann man beispielsweise durch Zugabe von Bisphenol A entsprechend den berechneten Werten erreichen.

Es kann ebenfalls vorteilhaf tsein, erneut Umesterungskatalysatorenn (s.o.) den kristallinen, gereinigten Oligomeren zuzusetzen. Die Polykondensation der Oligomeren kann im Sinne des erfindungsgemäßen Verfahrens kontinuierlich oder diskontinuierlich beispielsweise in Rührkesseln, Dünnschichtverdampfern, Rührkesselkaskaden, Extrudern, Knetern, einfachen Scheibenreaktoren und Hochviskosscheibenreaktoren durchgeführt werden.

Die resynthetisierten Polycarbonate sind geeignet für die üblichen Anwendungsgebiete, also in der Elektrotechnik, im Bausektor und im Kraftfahrzeugbau.

Nach der Abtrennung der Oligocarbonatkristalle von der Lösung verbleibt ein Filtrat, das neben überschüssigem Diarylcarbonat noch weitere Oligocarbonate und gegebenenfalls Zuschlagstoffe oder Produkte aus der Schädigung des Polycarbonates enthält. Die Diarylcarbonate können beispielsweise durch Destillation zurückerhalten und in den Spaltprozeß wieder eingesetzt werden. Je nach der Menge an Oligocarbonat, die dabei zurückbleibt und je nach deren Reinheit, beziehungsweise Abtrennbarkeit der unerwünschten Stoffe, kann zumindestens ein Großteil, oft bis zu 90 % des Oligocarbonates zur erfindungsgemäßen Polycarbonatresynthese verwendet werden. Der Rest an Oligocarbonat, kann in weniger anspruchsvollen Polymeren wie Phenolharzen mitverwendet oder aber durch Verbrennen entsorgt werden.

**Beispiele**

**Beispiel 1 bis 4**

300 g (1,40 Mol) Diphenylcarbonat wurden unter Stickstoff aufgeschmolzen mit 0,0026 g KOH versetzt und auf 200°C gebracht. Dazu gab man unter Rühren und Stickstoff portionsweise 1 016 g (4,0 Mol) Bisphenol A-Polycarbonat mit einem Molgewicht von ca. 28 000.

Nachdem alles aufgeschmolzen war, hielt man die Temperatur noch 1 h bei 240°, goß dann die Schmelze aus, ließ sie erstarren und zerkleinerte sie. Das erhaltene Material wurde 2 h mit etwa der 2 1/2- bis 3-fachen Menge an Lösungsmittel unter Sieden und Stickstoff behandelt und unter Rühren langsam erkalten gelassen. Der aus den Oligomeren gebildete Kristallbrei wurde abgedrückt, mit Lösungsmittel gewaschen und getrocknet, die vereinigten Filtrate eingedampft und der Rückstand im Hochvakuum destilliert, wobei ein kristallines Destillat (im wesentlichen Diphenylcarbonat) und ein schwach gefärbter glasiger Rückstand erhalten wurde.

Die Ergebnisse finden sich in Tabelle 1.

__Tabelle 1__

| Beispiel | Lösungsmittel | Carbonat* Oligomere | Schmelz-bereich | Rückstand aus Filtrat | Destillat Diphenyl-carbonat | Rückstand Oligomere |
|---|---|---|---|---|---|---|
| 1 | Xylol | 737 g | 165-8* | 570 g | 57 g | 510 g |
| 2 | Cyclohexan | 990 g | 172-9* | 321 g | 61 g | 259 g |
| 3 | Isopropanol | 988 g | 135-9* | 325 g | 66 g | 256 g |
| 4 | Butylacetat | 764 g | 180-5* | 546 g | 63 g | 483 g |

\* Die mittleren Molgewichte $\bar{M}_w$ liegen zwischen 1 800 und 2 200.

Aus der Tabelle 1 ist zu entnehmen, daß je nach Lösungsmittel und Verfahrensweise aus 1 316 g Eduktgemisch ca. 700 bis 1 000 g (50 bis 76 %) als kristallines für eine Polycarbonatsynthese geeignetes Oligomerengemisch isoliert werden kann.

Das abdestillierte Diphenylcarbonat (ca. 20 % der eingesetzten Menge) kann vollständig in den Prozeß zurückgeführt werden. Der nach Destillation verbleibende Oligomerenrückstand läßt sich je nach Verunreinigung mehr oder weniger vollständig wieder einsetzen; im vorliegenden Fall zu mindestens 90 %. Mit dem Rest wird ein Auslaß für Nebenprodukte aus der Polycarbonatschädigung und andere produktfremde Anteile geschaffen.

Auf diese Weise läßt sich eine Recyclatausbeute von > 95 % erreichen.

**Beispiele 5 bis 8**

Wie in Beispiel 1 bis 4 beschrieben, wurde eine Schmelze aus 1 016 g (4 Mol) Bisphenol A-Polycarbonat und 670 g 3,13 Mol Diphenylcarbonat hergestellt und über ein Bett von granulierter A-Kohle bei 250°C mit einer Geschwindigkeit von 0,3 Bettvolumen/h geleitet.

Dabei sank die ursprüngliche Viskosität von 1,171 auf deutlich niedrigere Werte. Die Ergebnisse zeigt Tabelle 2.

Die so erhaltenen Oligomerengemische können wie in Beispiel 1 bis 4 beschrieben, kristallisiert und aufgearbeitet werden.

Tabelle 2

| Beispiel | A-Kohle | Viskosität |
|----------|---------|------------|
| 5 | I | 1,114 |
| 6 | II | 1,118 |
| 7 | III | 1.065 |
| 8 | IV | 1,086 |
| I Norit RS d. Fa. Norit<br>II Norit R 2030 "<br>III Norit RB1 "<br>IV Sorbonorit 2 " | | |

**Beispiele 9 bis 12**

Wie in Beispiel 1 bis 4 beschrieben, wurde eine Schmelze aus 1 016 g (4 Mol) Bisphenol A-Polycarbonat und 1 700 g (7,9 Mol) Diphenylcarbonat hergestellt und wie in Beispiel 5 bis 8 über ein Bett von granulierter A-Kohle bei 200° mit einer Geschwindigkeit von 2 Bettvolumina/h geleitet.

Das Ergebnis zeigt Tabelle 3.

Tabelle 3

| **(Ausgangsviskosität 1,017)** | | |
|----------|---------|------------|
| Beispiel | A-Kohle* | Viskosität |
| 9 | I | 1,015 |
| 10 | II | 1,017 |
| 11 | III | 1,015 |

* siehe Legende zu Tabelle 2

**Patentansprüche**

1. Verfahren zum chemischen Recycling von thermoplastischen, aromatischen Polycarbonaten, dadurch gekennzeichnet, daß man die Polycarbonate mit Diarylcarbonaten in Gegenwart von Katalysatoren zu Oligocarbonaten abbaut, diese kristallisiert, reinigt und dann wieder zu thermoplastischen Polycarbonaten polykondensiert, wobei gegebenenfalls vor der Kristallisation unlösliche Bestandteile entfernt werden.

2. Verfahren gemäß Anspruch 1, dadurch gekennzeichnet, daß die Katalysatoren in Mengen von 0,00005 bis 10 Gew.-%, bezogen auf die Gewichtsmenge des zu spaltenden Polycarbonats eingesetzt werden.

3. Verfahren gemäß Anspruch 1, dadurch gekennzeichnet, daß die Katalysatoren in Mengen von 0,0001 bis 5 Gew.-%, bezogen auf die Gewichtsmenge des zu spaltenden Polycarbonats, eingesetzt werden.

4. Verfahren gemäß Anspruch 1, dadurch gekennzeichnet, daß die Polycarbonate mit den Diarylcarbonaten bei Temperaturen von 120°C bis 320°C umgesetzt werden.

**5.** Verfahren gemäß Anspruch 1, dadurch gekennzeichnet, daß das Molverhältnis von Polycarbonat zu Diarylcarbonat zwischen 1:0,05 und 1:3:5 liegt.

**6.** Verfahren gemäß Anspruch 1, dadurch gekennzeichnet, daß das $\overline{M}_w$ der Obligocarbonate zwischen 500 und 10 000 liegt.

**7.** Verfahren gemäß Anspruch 1, dadurch gekennzeichnet, daß die Polykondesation der Oligocarbonate zu den Polycarbonaten bei Temperaturen zwischen 100°C und 400°C erfolgt.

**8.** Verfahren gemäß Anspruch 7, dadurch gekennzeichnet, daß ein OH/Arylcarbonat-Endgruppenverhältnis der Reaktanten zwischen >25 % OH zu <75 % Arylcarbonat und <50 % zu >50 % Arylcarbonat vorliegt.

## Claims

**1.** Process for the chemical recycling of thermoplastic, aromatic polycarbonates, characterised in that the polycarbonates are broken down with diaryl carbonates in the presence of catalysts to yield oligocarbonates these are crystallised, purified and then polycondensed again to yield thermoplastic polycarbonates, wherein insoluble constituents are optionally removed before crystallisation.

**2.** Process according to claim 1, characterised in that the catalysts are used in quantities of 0.00005 to 10 wt.%, relative to the quantity by weight of the polycarbonate to be decomposed.

**3.** Process according to claim 1, characterised in that the catalysts are used in quantities of 0.0001 to 5 wt.%, relative to the quantity by weight of the polycarbonate to be decomposed.

**4.** Process according to claim 1, characterised in that the polycarbonates are reacted with the diaryl carbonates at temperatures of 120°C to 320°C.

**5.** Process according to claim 1, characterised in that the molar ratio of polycarbonate to diaryl carbonate is between 1:0.05 and 1:3.5.

**6.** Process according to claim 1, characterised in that the $\overline{M}_w$ of the oligocarbonates is between 500 and 10000.

**7.** Process according to claim 1, characterised in that polycondensation of the oligocarbonates to yield the polycarbonates proceeds at temperatures of between 100°C and 400°C.

**8.** Process according to claim 7, characterised in that an OH:aryl carbonate end group ratio of the reactants of between >25% OH:<75% aryl carbonate and <50% OH:>50% aryl carbonate prevails.

## Revendications

**1.** Procédé pour le recyclage chimique de polycarbonates aromatiques thermoplastiques, caractérisé en ce qu'on décompose les polycarbonates avec des diarylcarbonates en présence de catalyseurs pour obtenir des oligocarbonates, on cristallise ces derniers, on les purifie, puis on les soumet à une nouvelle polycondensation pour obtenir des polycarbonates thermoplastiques en éliminant le cas échéant des constituants insolubles avant la cristallisation.

**2.** Procédé selon la revendication 1, caractérisé en ce qu'on met en oeuvre les catalyseurs dans des quantités de 0,00005 à 10% en poids rapportés à la quantité pondérale du polycarbonate à scinder.

**3.** Procédé selon la-revendication 1, caractérisé en ce qu'on met en oeuvre les catalyseurs dans des quantités de 0,0001 à 5% en poids rapportés à la quantité pondérale du polycarbonate à scinder.

**4.** Procédé selon la revendication 1, caractérisé en ce qu'on fait réagir les polycarbonates avec les diarylcarbonates à des températures de 120°C à 320°C.

5. Procédé selon la revendication 1, caractérisé en ce que le rapport molaire du polycarbonate au diarylcarbonate se situe entre 1:0,05 et 1:3,5.

6. Procédé selon la revendication 1, caractérisé en ce que la valeur $\overline{M}_w$ des oligocarbonates se situe entre 500 et 10.000.

7. Procédé selon la revendication 1, caractérisé en ce que la polycondensation des oligocarbonates pour obtenir les polycarbonates a lieu à des températures entre 100°C et 400°C.

8. Procédé selon la revendication 7, caractérisé en ce qu'on se trouve en présence d'un rapport des groupes terminaux OH/arylcarbonate des réactifs entre > 25% OH à < 75% arylcarbonate et < 50% OH à > 50% arylcarbonate.